# EUROPEAN PATENT SPECIFICATION

(11) **EP 1 008 409 B1**
(45) Date of publication and mention of the grant of the patent: **27.03.2002**
(21) Application number: 99123987.2
(22) Date of filing: 07.12.1999
(51) Int. Cl.: B23B 31/117, B23P 19/00

(54) **Cutting tool and shrink fitting method for the same**
Schneidwerkzeug und dessen Befestigung mittels Schrumpfsitz
Outil de coupe et serrage d'outil par frettage

(30) Priority: 10.12.1998 JP 35197798
(43) Date of publication of application: 14.06.2000
(73) Proprietor: Mitsubishi Materials Corporation, Chiyoda-ku, Tokyo (JP)
(72) Inventor: Nagaya, Hidehiko, Mitsubishi Materials Corp., Yuuki-gun, Ibaraki-ken (JP); Shimomura, Hiroshi, Mitsubishi Materials Corp., Yuuki-gun, Ibaraki-ken (JP)
(74) Representative: HOFFMANN - EITLE

(56) References cited:
- DE-A- 19 638 822
- PATENT ABSTRACTS OF JAPAN vol. 012, no. 027 (M-662), 27 January 1988 (1988-01-27) & JP 62 181841 A (MITSUBISHI ELECTRIC CORP), 10 August 1987 (1987-08-10)

## Description

### [Field of the Invention]

The present invention relates to a cutting tool shrink fitting method for shrink fitting a tool and a tool holding portion and to a cutting tool obtained by this method.

### [Description of the Related Art]

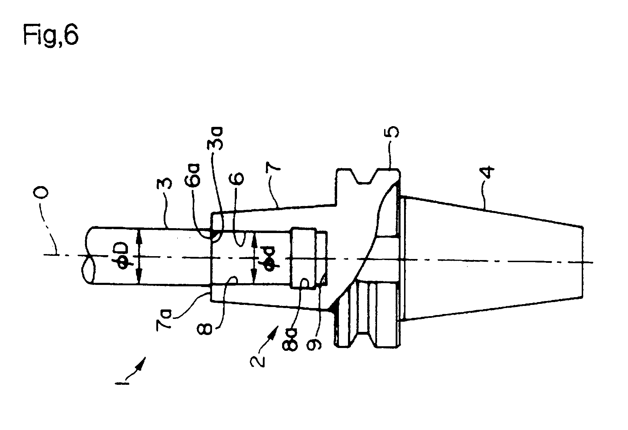

Fig. 6 shows a conventional example of a cutting tool fitting method of this type.

This cutting tool 1 is equipped with a tool holding portion 2 attached to the spindle of a machine tool (not shown) and a tool 3 shrink fitted into the tool holding portion 2.

The tool holding portion 2 includes a tapered arbor 4 secured, for example, to the spindle of the machine tool, a grip 5 in the form of a disc having a diameter larger than that of the arbor 4 and having a groove portion 5 to be gripped by a tool replacing arm or the like, and a support portion 7 having a substantially cylindrical hole 6 at the center and having, for example, a tapered configuration, the arbor 4, the grip 5 and the support portion 7 being formed coaxially and as an integral unit and having a central axis O for rotation. The hole 6 of the support portion 7 is equipped with a cylindrical inner peripheral surface 8 having an inner diameter φd and a bottom surface 9 positioned at the deepest end, a large diameter groove 8a being coaxially formed in the inner peripheral surface 8.

Only the cylindrical shaft portion at the base end side of the tool 3, which is shrink fitted into the hole 6 of the tool holding portion 2, is shown. This tool 3 has an outer diameter φD which is somewhat larger than the inner diameter d of the hole 6, and the difference between this outer diameter D and the inner diameter d of the hole 6, (D-d), is the interference.

The shrink fitting method for this cutting tool 1 will be described. First, as shown in Fig. 6, the base end surface 3a of the tool 3 is placed on the end surface 7a on the hole opening 6a side of the tool holding portion 2, and positioned substantially coaxially with the hole 6, whereby positioning at room temperature is effected, the operator maintaining the tool 3 in this state manually or by using a jig. Next, the support portion 7 of the tool holding portion 2, which has the hole 6, is heated so that it undergoes thermal expansion, and when the inner diameter d has become larger than the outer diameter D of the tool 3, the tool 3 is forced into the hole 6 to thereby effect fitting.

When the hole portion 6 has contracted by cooling, the tool 3 and the tool holding portion 2 are centered with each other, both being secured in position by the interference pressure.

### [Problems to be Solved by the Invention]

However, in this cutting tool 1, at the time of positioning prior to the shrink fitting, it is necessary for the operator to hold the tool 3 by hand or a jig and cause it to abut the end surface 7a where the hole 6 of the tool holding portion 2 opens, resulting in a complicated operation. Furthermore, the hole 6 and the tool 3 must be positioned coaxially at the time of positioning the tool 3 before the tool 3 can be efficiently inserted at the time of heating.

In view of these problems, DE 196 38 822 A1, on which is based the preamble of claim 1, discloses a chucking device which serves to hold a tool by means of an interference fit. The chucking device comprises a bore hole, into which the tool shaft can be mounted, and which comprises an outward section the diameter of which is large enough to receive the tool shaft before heating the chucking device. The diameter of an inward section of the bore hole is slightly smaller than the diameter of the tool shaft so that the bottom surface of the shaft rests on a step between the outward and inward section of the bore hole. When the chucking device is heated, the diameter of the inward section widens, and the tool slides into the inward section of the bore hole. However, the amount of projection of the tool increases because of the existence of the large diameter section of the bore hole, and therefore, the stiffness of the tool is reduced.

The present invention has been made in view of the above problems. It is accordingly an object of the present invention to provide a cutting tool in which the tool can be fitted into the tool holding portion easily and correctly and a fitting method for this cutting tool.

### [Means for Solving the Problems]

In accordance with the present invention, there is provided a cutting tool comprising a tool and a tool holding portion having a hole for fitting the tool main body by shrink fitting. The tool consists of a tool main body and a guide portion having a smaller diameter than that of the tool main body and formed coaxially with respect thereto. The outer diameter of the tool main body is set to be larger than the inner diameter of the hole so that the difference in size may serve as interference, wherein the outer diameter or the circumscribed circle diameter of the guide portion of the tool is slightly smaller than the inner diameter of the hole, and wherein the length of the guide portion of the tool is in the range of ¼ d < L < d, so that the guide portion is tightly inserted into the hole at room temperature. In the connecting section between the tool main body and the guide portion, there is provided a shoulder portion coming into contact with a surface around the hole.

Positioning can be effected by inserting the guide portion of the tool into the hole of the tool holding portion prior to the heating, and there is no need to hold the tool for shrink fitting, after which the tool main body automatically falls into the hole by heating the tool holding portion, and by fitting can be effected by cooling, so that shrink fitting can be effected easily.

The length L of the guide portion as measured along the central axis of the guide portion is in the range of d/4 to d, where d is the inner diameter of the hole.

When the length L is smaller than d/4, the tool may not be held coaxially with respect to the tool holding portion when the guide portion is inserted into the hole. On the other hand, when the length is larger than d, the interference length of the tool main body and the hole is too small, so that the requisite strength cannot be obtained.

### [Brief Description of the Drawings]

[Fig. 1] Fig. 1 is a partially cutaway side view of the tool holding portion and the tool of the cutting tool of an embodiment of this invention, showing them in state in which they are separated from each other along the central axis.

[Fig. 2] Fig. 2 is a partially cutaway side view of the tool holding portion and the tool guide portion, showing them in a state in which their positioning is effected at room temperature.

[Fig. 3] Fig. 3 is a partial enlarged view of the tool holding portion and the tool shown in Fig. 2.

[Fig. 4] Fig. 4 is a partially cutaway side view showing the tool in the state in which it is fitted into the tool holding portion.

[Fig. 5] Figs. 5(a), 5(b), 5(c) and 5(d) are plan views showing other examples of the configuration of the guide portion.

[Fig. 6] Fig. 6 is a partially cutaway side view showing how positioning is effected at room temperature in a conventional shrink fitting method.

### [Reference Numerals]

- 3: tool holding portion
- 6: hole
- 7: support portion
- 7a: end surface
- 10: cutting tool
- 12: tool
- 13: tool main body
- 13a: end surface (shoulder portion)
- 14: guide portion

### [Description of the Embodiment]

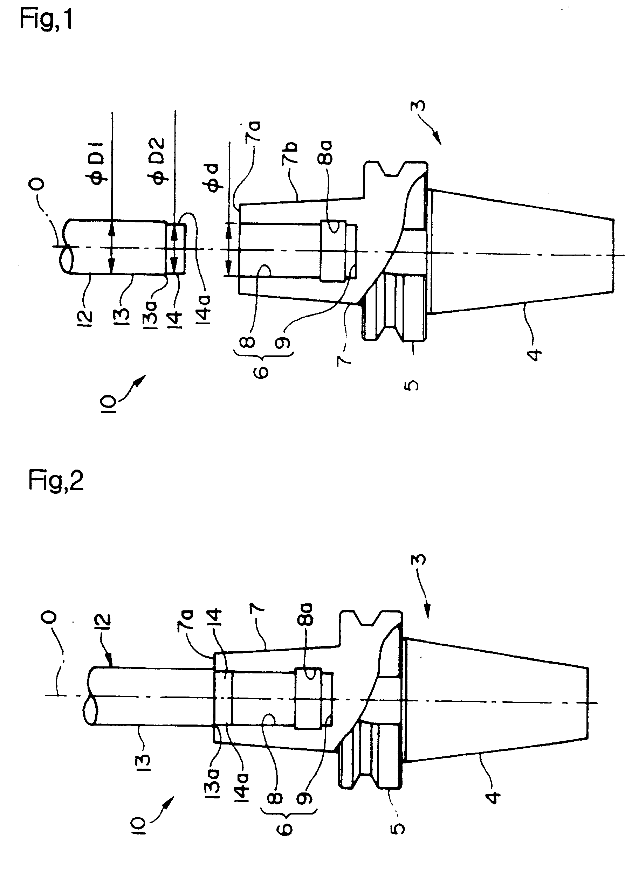

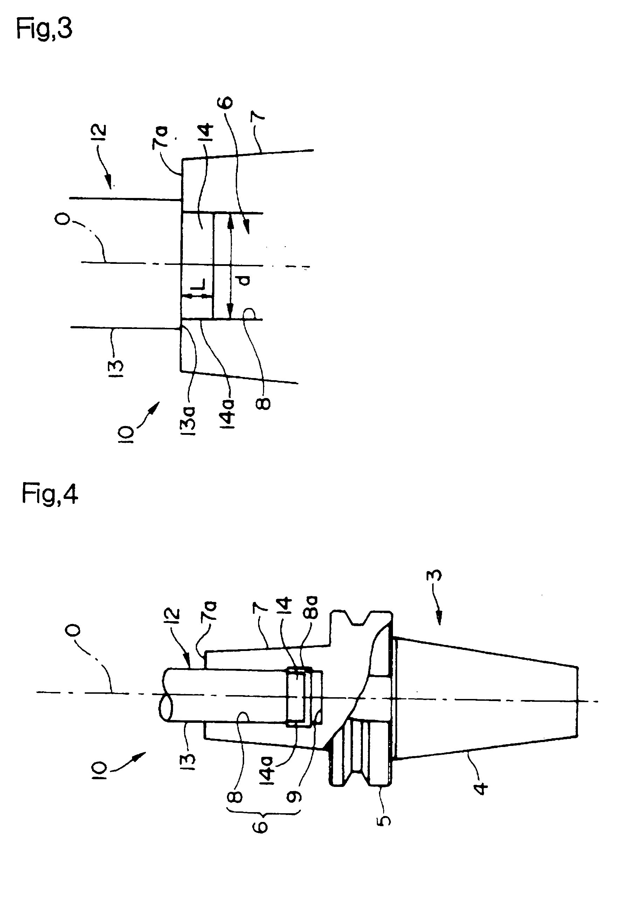

An embodiment of the present invention will be described with reference to Figs. 1 through 4. The components or members which are the same as those of the conventional technique described above are indicated by the same reference numerals, and a description thereof will be omitted. Fig. 1 is a partially cutaway side view of a tool and a tool holding portion in the state prior to the fitting, showing them in a separated state; Fig. 2 is a partially cutaway side view showing the state in which the tool guide portion has been fitted into the hole of the tool holding portion and positioned therein; Fig. 3 is a partial enlarged view of the portion of Fig. 2 where the tool is fitted into the hole; and Fig. 4 is a longitudinal sectional view of a shrink fitted cutting tool.

The cutting tool 10 shown in Fig. 1 comprises a tool 12 and the tool holding portion 3 described with reference to the conventional technique. The tool holding portion 3 has the same construction as that of the above-described conventional structure, and is formed of a material having a coefficient of thermal expansion larger than that of the tool 12, such as steel, the tool 12 being formed, for example, of hard metal, cermet or ceramic. In the drawing, only the base side portion of the tool 12 is shown, which is fitted into the hole 6 of the tool holding portion 3. This will be referred to as the tool main body 13. The base side portion of the tool main body 13, which is fitted into the tool holding portion 3, is formed as a cylinder having an outer diameter D1, and on the base end surface 13a thereof, there is integrally formed a cylindrical guide portion 14 having an outer diameter D2 which is somewhat smaller than D1. In order that this guide portion 14 may be tightly inserted into the hole 6 of the tool holding portion, the outer diameter D2 of the guide portion is slightly smaller than the inner diameter d of the hole 6. The outer diameter D1 of the tool main body 13 is somewhat larger than the inner diameter d of the hole 6 at room temperature.

In the state shown in Fig. 4, the guide portion 14 of the tool 12 and the tool main body 13 are shrink fitted into the hole 6. The difference between the outer diameter D1 of the tool main body 13 and the inner diameter d of the hole 6, (D1-d), serves as the interference, and by the interference pressure due to this interference, the tool 12 and the tool holding portion 3 are firmly fastened to each other.

The guide portion 14 and the tool main body 13 are formed coaxially with respect to the central axis O, and the connecting section between the peripheral surface 14a of the guide portion 14 and the end surface 13a of the tool main body 13 is a step portion at right angles as shown in Fig. 3, the ring-like end surface 13a constituting a shoulder portion.

It is desirable that the length L of the guide portion 14 as measured along the central axis O be set in the range of (1/4)d to d. When the length L is smaller than (1/4)d, there is the danger of the tool 12 being inclined with respect to the tool holding portion 3 when the guide portion 14 is inserted into the hole 6 for fitting at room temperature. On the other hand, when the length L is larger than d, the interference length when the tool 12 is fitted is small, resulting in a small fitting strength.

The cutting tool of this embodiment is constructed as described above. Next, the shrink fitting method will be described.

In the state shown in Fig. 1, the tool holding portion 3 and the tool 12 are separated from each other. Then, as shown in Figs. 2 and 3, the guide portion 14 of the tool 12 is inserted into the hole 6 of the tool holding portion 3, which is set erect with the opening of the hole 6 being directed upwardly. In this condition, the peripheral surface 14a of the guide portion 14 is held in close contact with the inner peripheral surface 8 of the hole 6. Further, the end surface 13a constituting the shoulder portion of the tool main body 13 abuts the end surface 7a around the hole 6 of the tool holding portion 3, so that the tool holding portion 3 and the tool 12 are positioned coaxially with respect to the central axis O.

In this condition, the tool 12 is held coaxially with respect to the tool holding portion 3 without having to hold the tool 12 by hand or a jig or the like, achieving the initial positioning.

In this state, the outer peripheral surface 7b of the support portion 7 of the tool holding portion 3 is heated, whereby the hole 6 undergoes thermal expansion and its diameter is increased. When the inner diameter d of the hole 6 has become larger than the outer diameter D1 of the tool main body 13, the tool main body falls into the hole 6, and a part of the tool main body 13 is fitted into the hole 6 as shown in Fig. 4. Then, the tool holding portion 3 is cooled, with the result that the tool main body 13 is firmly secured in position by interference pressure, the difference between the outer diameter D1 of the tool main body 13 and the inner diameter d of the hole 6, (D1-d), serving as the interference.

As described above, in this embodiment, the tool 12 and the tool holding portion 3 can be held coaxially in the state prior to the heating, and as a result of the subsequent heating, the tool 12 automatically falls into the hole 6 of the tool holding portion 3, using the guide portion 14 as the guide, and is fitted into the hole. Thus, the positioning of the tool 12 with respect to the tool holding portion 3 and the fitting at the time of shrink fitting can be conducted easily without having to support or force in the tool 12 by hand or a jig or the like.

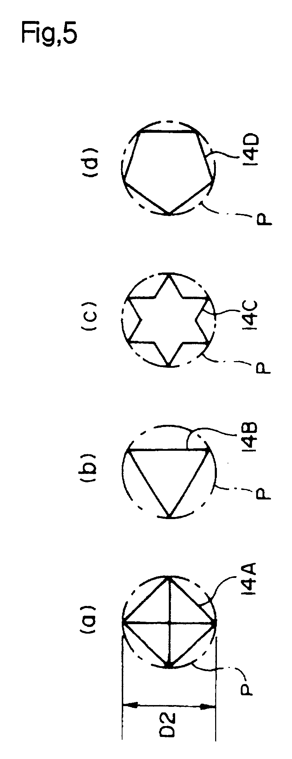

While in the above-described embodiment the guide portion 14 is cylindrical, this should not be construed restrictively. It is also possible, for example, to form a guide portion 14A in the form of a square pole as shown in Fig. 5(a). In this case, the circumscribed circle P of the guide portion 14A has a diameter φD2. When the guide portion 14A is inserted into the hole 6, it tightly abuts the inner peripheral surface 8 of the hole 6, making it possible to hold the tool 12 and the tool holding portion 3 coaxially.

Similarly, it is possible to adopt any appropriate configuration of the guide portion lying on the circumscribed circle P, for example, a guide portion 14B in the form of a triangle pole shown in Fig. 5(b), a guide portion 14C in the form of a star pole shown in Fig. 5(c), or a guide portion 14D in the form of a pentagonal pole shown in Fig. 5(d).

Further, while in the above-described embodiment the tool 12 is formed of hard metal or the like and the tool holding portion 3 is formed of steel or the like, the materials of the components are not restricted to these, and it is possible to adopt various materials. Furthermore, it is not absolutely necessary for the components to be formed of different materials. They may be formed of the same material.

The present invention is applicable to various types of cutting tool, for example, turning tools or rotary cutting tools such as end mills and drills.

### [Advantages]

As described above, in the cutting tool and the shrink fitting method of the present invention, mutual positioning can be effected by inserting the guide portion into the hole of the tool holding portion prior to the heating, and there is no need to hold the tool for shrink fitting; since the tool main body automatically falls into the hole by heating the tool holding portion after that, the shrink fitting can be effected simply and easily, and centering can also be effected.

## Claims

1. A cutting tool (10) comprising a tool (12) and a tool holding portion (3) having a hole (6) for fitting the tool main body (13) by shrink fitting,
**characterized in that**
the tool (12) consists of a tool main body (13) and a guide portion (14) having a smaller diameter than that of the tool main body (13) and formed coaxially with respect thereto, wherein the outer diameter (D1) of the tool main body (13) is set to be larger than the inner diameter (d) of the hole (6) so that the difference in size may serve as interference, wherein the outer diameter or the circumscribed circle diameter (D2) of the guide portion (14) of the tool (12) is slightly smaller than the inner diameter (d) of the hole (6), and wherein the length (L) of the guide portion (14) of the tool (12) is in the range of ¼ d < L < d, so that the guide portion (14) is tightly inserted into the hole (6) at room temperature, and wherein there is provided in the connecting section between the tool main body (13) and the guide portion (14) a shoulder portion (13a) coming into contact with a surface around the hole (6).

## Patentansprüche

1. Schneidwerkzeug mit einem Werkzeug (12) sowie einer Werkzeughalterung (3) mit einer Öffnung (6) zum Einpassen des Werkzeughauptkörpers (13) durch eine Schrumpfpassung,
**dadurch gekennzeichnet, dass**
das Werkzeug (12) aus einem Werkzeughauptkörper (13) und einem Führungsbereich (14) besteht, welcher einen geringeren Durchmesser hat als der Werkzeughauptkörper (13) und koaxial damit ausgebildet ist, wobei der äußere Durchmesser (D1) des Werkzeughauptkörpers (13) größer ist als der innere Durchmesser (d) der Öffnung (6), so dass die Differenz als Passung dienen kann, wobei der äußere Durchmesser oder der Umkreisdurchmesser (D2) des Führungsbereichs (14) des Werkzeugs (12) geringfügig kleiner ist als der innere Durchmesser (d) der Öffnung (6), und wobei die Länge (L) des Führungsbereichs (14) des Werkzeugs (12) im Bereich von 1/4 d < L < d liegt, so dass der Führungsbereich (14) bei Raumtemperatur fest in die Öffnung (6) eingeführt wird, und wobei im Verbindungsabschnitt zwischen dem Werkzeughauptkörper (13) und dem Führungsbereich (14) ein Schulterbereich (13a) vorgesehen ist, welcher in Kontakt mit einer Fläche um die Öffnung (6) herum gerät.

## Revendications

1. Outil de coupe (10) comprenant un outil (12) et une partie supportant l'outil (3) ayant un trou (6) destiné au montage du corps principal de l'outil (13) par ajustement frété,
**caractérisé en ce que**
l'outil (12) est composé d'un corps principal d'outil (13) et d'une partie de guidage (14) ayant un diamètre plus petit que celui du corps principal d'outil (13) et est formé coaxialement par rapport à celui-ci, dans lequel le diamètre extérieur (D1) du corps principal d'outil (13) est déterminé pour être plus grand que le diamètre intérieur (d) du trou (6) de sorte que la différence de taille peut servir d'interférence, dans lequel le diamètre extérieur ou bien le diamètre du cercle circonscrit (D2) de la partie de guidage (14) de l'outil 12 est légèrement plus petit que le diamètre intérieur (d) du trou (6), et dans lequel la longueur (L) de la partie de guidage (14) de l'outil (12) est dans la plage de ¼ d < L < d, de sorte que la partie de guidage (14) est introduite en étant serrée dans le trou (6) à la température ambiante, et dans lequel est prévue dans la partie de raccordement entre le corps principal d'outil (13) et la partie de guidage (14) une partie formant épaulement (13a) venant en contact avec une surface entourant le trou (6).
